# EUROPEAN PATENT SPECIFICATION

(11) **EP 2 068 631 B1**
(45) Date of publication and mention of the grant of the patent: **12.05.2010**
(21) Application number: 07810563.2
(22) Date of filing: 18.07.2007
(51) Int. Cl.: A01N 43/40, A01N 53/00, A01P 21/00

(54) **COTTON FIBER LENGTH ENHANCEMENT**
VERBESSERUNG DER LÄNGE VON BAUMWOLLFASERN
AMELIORATION DE LA LONGUEUR D'UNE FIBRE DE COTON

(30) Priority: 25.09.2006 US 526414
(43) Date of publication of application: 17.06.2009
(73) Proprietor: Bayer Cropscience LP, Research Triangle Park, NC 27709 (US)
(72) Inventor: COLLINS, James R., Durham, NC 27707 (US); VODRAZKA, Keith W., Lakeland, TN 38002 (US)
(74) Representative: Schwenk, Norbert
(86) International application number: PCT/US2007/016261
(87) International publication number: WO 2008/039265

(56) References cited:
- US-A- 5 478 796
- DATABASE CA [Online] CHEMICAL ABSTRACTS SERVICE, COLUMBUS, OHIO, US; VANDIVER, M. R. ET AL: "Evaluation of Stance as a plant growth regulator in irrigated cotton in the Texas High Plains" XP009091949 retrieved from STN Database accession no. 2006:1214302 & PROCEEDINGS - BELTWIDE COTTON CONFERENCES 1833.1837/1-1833.1837/5 CODEN: PCOCEN; ISSN: 1059-2644, 2006,
- DATABASE BIOSIS [Online] BIOSCIENCES INFORMATION SERVICE, PHILADELPHIA, PA, US; 1988, MAKRAM E: "COTTON RESPONSE TO MEPIQUAT CHLORIDE IN THE REPUBLIC OF BURUNDI" XP001537638 Database accession no. PREV199089010716 & ANNALS OF AGRICULTURAL SCIENCE (CAIRO), vol. 33, no. 2, 1988, pages 931-940, ISSN: 0570-1783
- DATABASE BIOSIS [Online] BIOSCIENCES INFORMATION SERVICE, PHILADELPHIA, PA, US; January 2004 (2004-01), FAIRCLOTH JOEL C ET AL: "The influence of defoliation timing on yields and quality of two cotton cultivars." XP002458800 Database accession no. PREV200400207627 & CROP SCIENCE, vol. 44, no. 1, January 2004 (2004-01), pages 165-172, ISSN: 0011-183X

## Description

This invention relates to a process of applying a mixture of two plant growth regulators producing a beneficial effect on the quality of cotton fiber yielding cotton fibers with increased fiber length.

### SUMMARY OF THE INVENTION

This invention relates to a method for producing cotton fibers with improved fiber characteristics such as increased fiber length using a combination of two plant growth regulators.

### BRIEF DESCRIPTION OF THE DRAWINGS

FIG. 1 is a graphical illustration of cotton fiber length versus type and quantity of plant growth regulator application.
FIG. 2 is a graphical illustration of cotton fiber length versus type and quantity of plant growth regulator application.

### DETAILED DESCRIPTION OF THE INVENTION

It is always desirable to improve agricultural produce such as cotton, both on the quantitative level, as regards the yield, and on the qualitative level. In the case of cotton, it is advantageous to be able to not only reduce growth in order to increase the earliness of harvesting but to contribute a beneficial effect on the quantity and quality of the fiber yield with increased fiber length. Cotton is an important and valuable field crop. A continuing goal of cotton growers is to maximize the amount and quality of the fiber produced on the land used and to supply fiber, oil and food for animals and humans. To accomplish this goal, the cotton growers must select plant growth regulators that can help them achieve this goal.

U.S. Patent No. 5,478,796 to Szoeke has shown that compositions characterized by a mixture comprising mepiquat chloride and cyclanilide have a growth regulatory effect on cotton. Szoeke describes the effect on cotton as reducing growth in order to increase the earliness of harvesting while contributing a beneficial effect on the quantity of fiber yield. Cotton growth was measurably decreased in size in the plots treated with the combination of mepiquat chloride and cyclanilide. Szoeke describes a treatment process and composition "with a view to shortening vegetation and improving yield." (column 1, lines 14-15). While Szoeke's aim is to "reduce growth in order to increase the earliness of harvesting while contributing a beneficial effect on the quantity and quality of the fiber yield) (column 1, lines 37-39), Szoeke only observed and described an increase in overall yield of cotton, but he never observed an increase in overall quality of the cotton fiber from an increase in cotton fiber length. At certain application rates, an increase in fiber length has been observed and is described herein. Mepiquat chloride is known to have an action on cotton fibre length (see E. MAKRAM, "Cotton response to mepiquat chloride in the Republic of Burundi", Annals of Agricultural science (Cairo) vol 33, no 2, 1988, pp. 931-940).

The application of a combination of 2 plant growth regulators, mepiquat chloride and cyclanilide, at certain ranges and application rates, has yielded an unexpected increase in cotton fiber length. These plant growth regulators have multiple modes of action. There are two major hormones that result in the growth of a cotton plant -auxin and gibberellic acid. The combined application of these 2 active ingredients inhibits auxin transport and gibberellic acid synthesis. This has the added benefit of shortening the internodes of the cotton plant. By shortening the internode between each limb, it prevents the cotton plant from becoming tall, but unexpectedly it also increases the fiber length giving a better overall quality of cotton fiber to farmers.

The first component of the composition is a derivative of cyclopropylmalonanilic acid known as cyclanilide or 1-(N-(2,4-dichlorophenyl)carbamoyl)cyclopropanecarboxylic acid or else its ammonium, alkylammonium, polyalkylammonium, hydroxyalkylammonium or poly(hydroxyalkyl)ammonium salts, or alkali metal or alkaline-earth metal salts, or alternatively its esters.

The second component of the composition is mepiquat chloride, also known as chloride of mepiquat 1,1-dimethylpiperidine chloride, and is widely used by farmers for treating cotton. This compound has the effect of shortening vegetation. This compound is known to inhibit the synthesis of gibberellic acid. The method of action therefore does not involve the formation of ethylene in plants. Moreover, it is obvious that other salts of mepiquat, which is a quaternary ammonium, form part of the present invention.

The ratio by weight of cyclanilide to mepiquat chloride for increasing fiber length is from 1:1 to 1:10, preferably 1:4. The preferable concentration of cyclanilide is 0.184 pounds per gallon (i.e., 22 grams active ingredient/liter) and for mepiquat chloride the concentration is 0.736 pounds per gallon (i.e., 88 grams total active ingredient/liter), along with the standard inert ingredients common in the industry.

Application rates are typically in the range from 1 to 3 oz/acre of formulated product at the above listed concentrations (i.e., equivalent to approximately 8 to 25 grams active ingredient of the mixture/hectare), the range may be as low as 0.5 oz/acre (equivalent to 4 grams of total active ingredients for the mixture/hectare) and may be as high as 8 oz/acre (i.e., equivalent to approximately 64 grams total active ingredient of the mixture/hectare) in a single application or 25 oz/acre (i.e., equivalent to approximately 200 grams total active ingredient of the mixture/hectare) over multiple applications. Given the preferable mixture concentration of cyclanilide of 22 g/l (0.184 pounds per gallon), and for mepiquat chloride a concentration of 88 g/l (0.736 pounds per gallon), a 3,8 l (one gallon) mixture applied an application rate of 146 ml/ha (2 ounces per acre), will treat 25,9 ha (64 acres). Application is advantageously carried out on the aerial parts of the plant, during its growth period. Although the mixture is preferably applied multiple times, preferably at least 2 to 4 times, over a several month period at the above application ranges, the effect on fiber length can be seen even with a single application.

The invention can relate to the specific ratio of the concentrated composition of the two plant growth regulators, that is to say the commercial product combining the two active materials. It can also relate to the dilute composition which is ready to be sprayed on the cotton to be treated. In the latter case, dilution with water can be carried out from a commercial concentrated composition containing the two active materials (this mixture is known as "ready mix") or on the mixture which is prepared at the time of use (known as "tank mix") of two commercial concentrated compositions, each containing one active material.

The compositions according to the invention can additionally comprise all the usual additives or adjuvants for plant-protection compositions, especially vehicles, surface-active agents, adherence agents and fluence agents.

In the present description, the term "vehicle" denotes a natural or synthetic, organic or inorganic material with which the active materials are combined to facilitate its application on the plant, on seeds or on the ground. This vehicle is thus generally inert and it must be agriculturally acceptable especially on the treated plant. The vehicle can be solid (clays, natural or synthetic silicates, silica, resins, waxes, solid fertilizers and the like) or liquid (water, alcohols, ketones, petroleum fractions, aromatic or paraffinic hydrocarbons, chlorinated hydrocarbons, liquefied gases, and the like).

The surface-active agent can be an emulsifying, dispersing or wetting agent of ionic or nonionic type. Mention may be made, for example, of salts of polyacrylic acids, salts of lignosulfonic acids, salts of phenolsulfonic or naphthalenesulfonic acids, polycondensates of ethylene oxide with fatty alcohols or with fatty acids or with fatty amines, substituted phenols (especially alkylphenols or arylphenols), salts of esters of sulfosuccinic acids, taurine derivatives (especially alkyltaurates) or phosphoric esters of polyoxyethylated phenols or alcohols. The presence of at least one surface-active agent is desirable in order to promote dispersion of the active materials in water and their good application on plants.

These compositions can also contain any kind of other ingredients such as, for example, protective colloids, adhesives, thickening agents, thixotropic agents, penetrating agents, stabilizing agents, organic acids, sequestering agents, pigments, dyes or polymers.

More generally, the compositions according to the invention can be combined with all the solid or liquid additives corresponding to the conventional formulating techniques for plant-protection products.

The compositions according to the invention can be in the solid, gel or liquid form and, in the latter case, in the form of solutions or suspensions or emulsions or emulsifiable concentrates. Liquid compositions are preferred, due both to their ease of use and to their simplicity of manufacture.

Other options include forms of solid compositions, the powders for dusting or dispersion (with a content of active compounds which can range up to 100%), wettable powders and granules for spreading while dry, as well as dispersable or soluble granules. Wettable powders (or powders to be sprayed), as well as dispersable granules, generally contain 20 to 95% of active materials and, in addition to the solid vehicle, from 0 to 5% of a wetting agent, from 3 to 10% of a dispersing agent and, when this is necessary, from 0 to 10% of one or more stabilizing agents and/or other additives, such as pigments, dyes, penetrating agents, adhesives, or anticlumping agents, dyes and the like. It is well understood that some of these compositions, such as wettable powders or dispersable granules, are intended to constitute liquid compositions at the time of application. Thus, to obtain powders to be sprayed or wettable powders, the active materials are intimately mixed, in suitable mixers, with the additional substances and the mixture is milled with mills or other grinders. Powders to be sprayed are thereby obtained with advantageous wettability and suspensibility; they can be suspended in water at any desired concentration and these suspensions can be used very advantageously, in particular for application to the aerial parts of plants.

Other options include forms of liquid compositions, of solutions, in particular water-soluble concentrates, emulsifiable concentrates, emulsions, suspension concentrates, aerosols or pastes.

The compositions according to the invention are prepared according to processes known per se.

Pastes or suspension concentrates can be produced in place of wettable powders. The conditions and modes of production and use of these pastes are similar to those of wettable powders or powders to be sprayed, part of the milling operation necessary simply being carried out in liquid medium.

Dispersable granules are generally prepared by agglomeration or extrusion or compacting, in suitable granulation systems, of compositions of wettable powder type. Granules for spreading while dry are usually obtained by impregnating a granulated vehicle with a solution or an emulsion of the active materials.

A person skilled in the art will advantageously choose, from these compositions, that or those which are suitable according to the combinations chosen.

The compositions can most often contain the two growth regulators defined above (binary combination) or in combination with other active ingredients as three (ternary combination) or even four (quaternary combination).

The process for treating cotton plants to increase their fiber length, is characterized in that an effective and non-phytotoxic dose of a composition according to the invention is applied aerially to the cotton.

### EXAMPLES

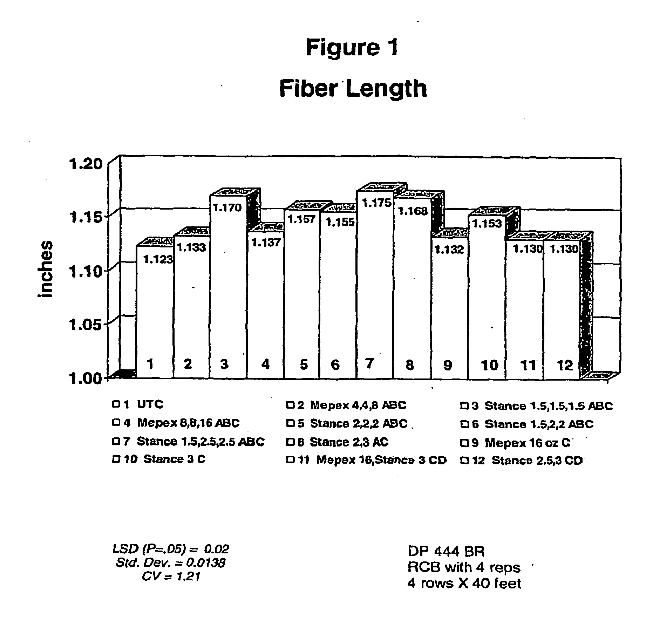

As can be seen in Figure 1, untreated cotton fiber was at 2,85 cm (1.123 inches) and in the case where the cotton was treated in three applications, on June 22, 2005, July 5, 2005 and July 19, 2005, with 1.5 fluid ounces/acre of Stance^{™} (i.e., 12.1 g total active ingredients/hectare) at each application, which is a combination of 8.4% mepiquat chloride and 2.1% cyclanilide, the cotton fiber length increased to 2,97 cm (1.170 inches). In another case, three applications of Stance^{™} of 1.5 fluid ounces (i.e., 12.1 g total active ingredients/hectare), 2.5 fluid ounces (i.e., 20.2 g total active ingredients/hectare) and 2.5 fluid ounces on June 22, 2005, July 5, 2005 and July 19, 2005 respectively yielded a fiber length of 2,98 cm (1.175 inches). Fiber length was increased from even a single application of 3 ounces/acre (equivalent to 24.2 g total active ingredients/hectare).

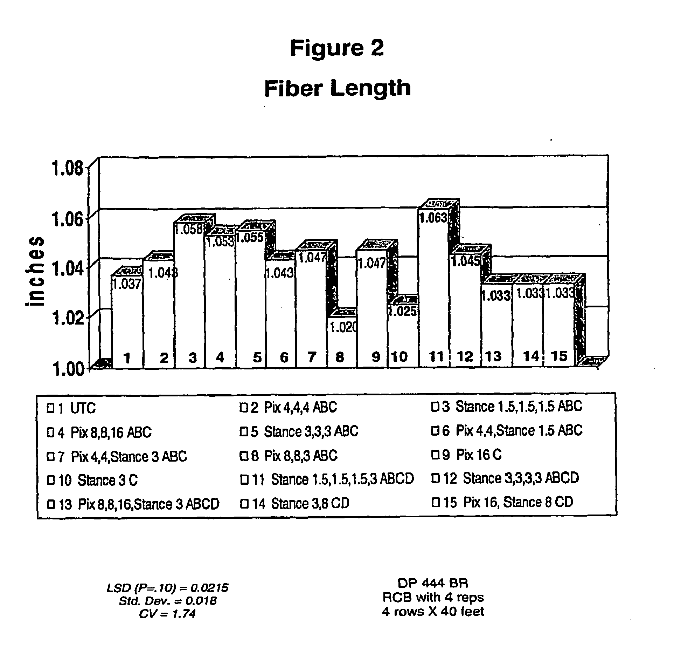

As can be seen in Figure 2, the cotton fiber length increased from an untreated length of 2,63 cm (1.037 inches) to a length of 2,7 (1.063 inches) when treated in 4 applications of 1.5, 1.5, 1.5, and 3.0 fluid ounces of Stance^{™} (where 1.5 ounces/acre is equivalent to 12.1 g total active ingredients/hectare and 3.0 ounces/acre is equivalent to 24.2 g total active ingredients/hectare).

## Claims

1. A method for improving cotton fiber length comprising applying to cotton a composition comprising a mixture of
A. cyclanilide or one of its agriculturally effective salts,
B. mepiquat chloride or one of its agriculturally effective salts,
C. optional additives for plant-protection compositions,
D. optional adjuvants for plant-protection compositions, and wherein the mixture is applied at an application rate such that the total of components A and B is from 4 to 200 g/hectare.

2. The method according to claim 1 wherein the mixture ratio by weight of component A to component B is in the range of from 1:1 to 1:10.

3. The method according to claim 1 wherein the mixture ratio by weight of A to B is 1:4.

4. The method according to claim 1 wherein the mixture is applied to aerial parts of the cotton.

5. The method according to claim 1 wherein the mixture is applied at a rate such that the total of components A and B is from 4 to 15 g /hectare.

6. The method according to claim 1 wherein the mixture is applied at a rate such that the total of components A and B is 12 g/hectare.

7. The method according to claim 1 **characterized in that** the mixture is applied at a rate such that the total of components A and B is from 16 to 24 g/hectare.

8. The method according to claim 1 wherein the mixture is applied at a rate such that the total of components A and B is 16 g/hectare,

9. The method according to claim 1 wherein the mixture is applied at a rate such that the total of components A and B is 24 g/hectare.

10. The method according to claim 1 **characterized in that** the mixture is applied at a rate such that the total of components A and B is from 24 to 64 g/hectare.

11. The method according to claim 1 wherein the mixture is applied at a rate such that the total of components A and B is from 64 to 200 g/hectare.

12. The method according to claim 1 wherein the cotton is treated to multiple applications over a period of several months.

13. The method according to claim 1 wherein the cotton is treated to multiple applications such that the total of components A and B is 12 g (A+B)/hectare over a period of 3 months.

## Patentansprüche

1. Verfahren zur Verbesserung der Baumwollfaserlänge, umfassend das Anwenden einer Zusammensetzung auf Baumwolle, welche Zusammensetzung eine Mischung aus
A. Cyclanilid oder eines seiner landwirtschaftlich wirksamen Salze,
B. Mepiquatchlorid oder eines seiner landwirtschaftlich wirksamen Salze,
C. fakultative Additive für Pflanzenschutzzusammensetzungen,
D. fakultative Adjuvantien für Pflanzenschutzzusammensetzungen umfasst, und
wobei die Mischung in einer Anwendungsrate angewandt wird, sodass die Gesamtmenge an den Komponenten A und B von 4 bis 200 g/Hektar beträgt.

2. Verfahren nach Anspruch 1, wobei das Mischungsverhältnis, bezogen auf das Gewicht, von Komponente A zu Komponente B im Bereich von 1:1 bis 1:10 beträgt.

3. Verfahren nach Anspruch 1, wobei das Mischungsverhältnis, bezogen auf das Gewicht, von A zu B 1:4 beträgt.

4. Verfahren nach Anspruch 1, wobei die Mischung auf oberirdische Teile der Baumwolle angewandt wird.

5. Verfahren nach Anspruch 1, wobei die Mischung mit einer Rate angewandt wird, sodass die Gesamtmenge an den Komponenten A und B von 4 bis 15 g/Hektar beträgt.

6. Verfahren nach Anspruch 1, wobei die Mischung mit einer Rate angewandt wird, sodass die Gesamtmenge an den Komponenten A und B 12 g/Hektar beträgt.

7. Verfahren nach Anspruch 1, **dadurch gekennzeichnet, dass** die Mischung in einer Rate angewandt wird, sodass die Gesamtmenge an den Komponenten A und B von 16 bis 24 g/Hektar beträgt.

8. Verfahren nach Anspruch 1, wobei die Mischung in einer Rate angewandt wird, sodass die Gesamtmenge an den Komponenten A und B 16 g/Hektar beträgt.

9. Verfahren nach Anspruch 1, wobei die Mischung in einer Rate angewandt wird, sodass die Gesamtmenge an den Komponenten A und B 24 g/Hektar beträgt.

10. Verfahren nach Anspruch 1, **dadurch gekennzeichnet, dass** die Mischung in einer Rate angewandt wird, sodass die Gesamtmenge an den Komponenten A und B von 24 bis 64 g/Hektar beträgt.

11. Verfahren nach Anspruch 1, wobei die Mischung mit einer Rate angewandt wird, sodass die Gesamtmenge an den Komponenten A und B von 64 bis 200 g/Hektar beträgt.

12. Verfahren nach Anspruch 1, wobei die Baumwolle während einer Dauer von mehreren Monaten mehreren Anwendungen unterzogen wird.

13. Verfahren nach Anspruch 1, wobei die Baumwolle mehreren Anwendungen unterzogen wird, sodass die Gesamtmenge an den Komponenten A und B 12 g (A+B)/Hektar über eine Dauer von 3 Monaten beträgt.

## Revendications

1. Procédé pour améliorer la longueur d'une fibre de coton comprenant l'application à un coton d'une composition comprenant un mélange
A. de cyclanilide ou d'un de ses sels efficaces au niveau agricole,
B. de mépiquat-chlorure ou d'un de ses sels efficaces au niveau agricole,
C. d'additifs facultatifs pour des compositions de protection des plantes,
D. d'adjuvants facultatifs pour des compositions de protection des plantes, et
dans lequel le mélange est appliqué à un taux d'application tel que le total des constituants A et B est de 4 à 200 g/ha.

2. Procédé selon la revendication 1, dans lequel le rapport de mélange en poids du constituant A au constituant B se trouve dans l'intervalle de 1:1 à 1:10.

3. Procédé selon la revendication 1, dans lequel le rapport de mélange en poids de A à B est de 1:4.

4. Procédé selon la revendication 1, dans lequel le mélange est appliqué à des parties aériennes du coton.

5. Procédé selon la revendication 1, dans lequel le mélange est appliqué à un taux tel que le total des constituants A et B est de 4 à 15 g/ha.

6. Procédé selon la revendication 1, dans lequel le mélange est appliqué à un taux tel que le total des constituants A et B est de 12 g/ha.

7. Procédé selon la revendication 1, **caractérisé en ce que** le mélange est appliqué à un taux tel que le total des constituants A et B est de 16 à 24 g/ha.

8. Procédé selon la revendication 1, dans lequel le mélange est appliqué à un taux tel que le total des constituants A et B est de 16 g/ha.

9. Procédé selon la revendication 1, dans lequel le mélange est appliqué à un taux tel que le total des constituants A et B est de 24 g/ha.

10. Procédé selon la revendication 1, **caractérisé en ce que** le mélange est appliqué à un taux tel que le total des constituants A et B est de 24 à 64 g/ha.

11. Procédé selon la revendication 1, dans lequel le mélange est appliqué à un taux tel que le total des constituants A et B est de 64 à 200 g/ha.

12. Procédé selon la revendication 1, dans lequel le coton est traité pour des applications multiples sur une durée de plusieurs mois.

13. Procédé selon la revendication 1, dans lequel le coton est traité pour des applications multiples telles que le total des constituants A et B est de 12 g de (A + B)/ha sur une durée de trois mois.
